Europäisches Patentamt

European Patent Office

Office européen des brevets

(11) Numéro de publication: **0 117 965**
A1

## (12) DEMANDE DE BREVET EUROPEEN

(21) Numéro de dépôt: 83450005.0

(22) Date de dépôt: 03.03.83

(51) Int. Cl.³: **E 04 C 3/26**
G 01 B 5/00

(43) Date de publication de la demande:
12.09.84 Bulletin 84/37

(84) Etats contractants désignés:
CH DE FR GB IT LI SE

(71) Demandeur: GAME INGENIERIE Société Anonyme
22 boulevard Saint Martin
F-33600 Pessac(FR)

(72) Inventeur: Chevrier, René
13, Les Prés de l'Eglise
Pompignac F-33370 Tresses(FR)

(74) Mandataire: Thébault, Jean-Louis
Cabinet Jean-Louis Thébault 50, Cours de Verdun
F-33000 Bordeaux(FR)

(54) Dispositif de pré-contrainte de poutres supports de têtes notamment de mesure.

(57) Le dispositif est constitué d'une lame d'acier (4) disposée dans une rainure verticale (3) ménagée dans la face inférieure (1a) de la poutre à pré-contraindre (1) et s'étendant sensiblement sur toute la longueur de la poutre entre les deux appuis (2) de celle-ci, ladite lame (4) étant ancrée à chaque extrémité sur la poutre et traversée dans toute sa largeur de trous taraudés (16) répartis régulièrement le long de la poutre et recevant des vérins mécaniques (17) prenant appui contre le fond de ladite rainure (3).

Application notamment aux bancs de mesure tridimensionnelle.

FIG.1

EP 0 117 965 A1

- 1 -

DISPOSITIF DE PRE-CONTRAINTE
DE POUTRES SUPPORTS DE TETES NOTAMMENT DE MESURE

La présente invention se rapporte à un dispositif de pré-contrainte de poutres supportant une tête mobile de mesure, d'usinage, de positionnement ou autre, en vue de compenser la flèche naturelle des poutres dues à leur poids et à celui de l'équipage mobile qu'elles supportent.

L'invention sera décrite dans son application à la réalisation de poutres en granit, simples ou jumelles, horizontales, destinées à supporter les équipages mobiles, tels que chariots et coulisseau porte-tête de mesure d'un banc de mesure tridimensionnelle, mais il est bien évident que l'invention peut s'appliquer à d'autres machines de mesure ou d'usinage, ou à des robots de manipulation et, d'une manière générale, partout où il peut se révéler nécessaire de compenser la flèche naturelle d'une poutre-support due au poids.

A cet effet, l'invention a pour objet un dispositif de pré-contrainte de poutres notamment de poutres en granit destinées à supporter les équipages mobiles d'un banc de mesure tridimensionnelle, caractérisé en ce qu'il est constitué d'une lame d'acier disposée dans une rainure verticale ménagée dans la face inférieure de la poutre à pré-contraindre et s'étendant sensiblement sur toute la longueur de la poutre entre les deux appuis de celle-ci, ladite lame étant ancrée à chaque extrémité sur la poutre et traversée dans toute sa largeur de trous taraudés répartis régulièrement le long de la poutre et recevant des vérins mécaniques prenant appui contre le fond de ladite rainure.

Un tel dispositif permet par réglage de la pression individuelle de chaque vérin sur le fond de la rainure de conférer à l'ensemble de la poutre lorsqu'elle est en charge une flèche rigoureusement nulle, la poutre étant strictement à l'horizontale du fait du contre-cintrage opéré sur la masse de granit par les vérins prenant appui sur la lame rigide en acier.

D'autres caractéristiques et avantages de l'invention ressortiront de la description qui va suivre d'un mode de réalisation du dispositif ci-dessus, description donnée à titre d'exemple uniquement et en regard des dessins annexés sur lesquels :

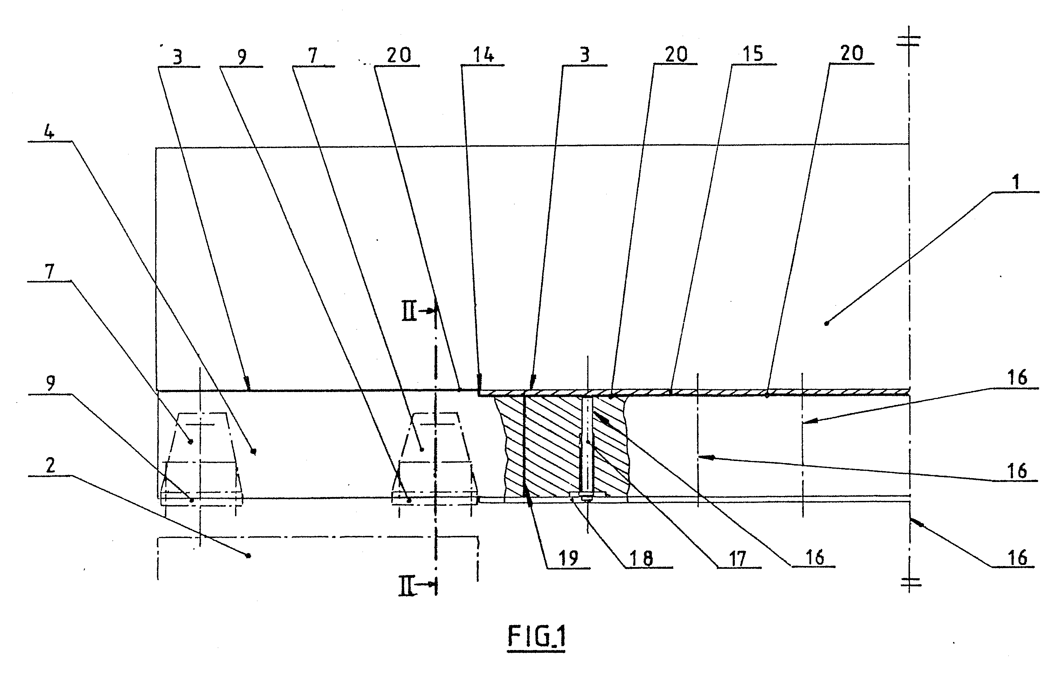

- Figure 1 représente une demi-vue en élévation d'une poutre en granit pourvue d'un dispositif conforme à l'invention,

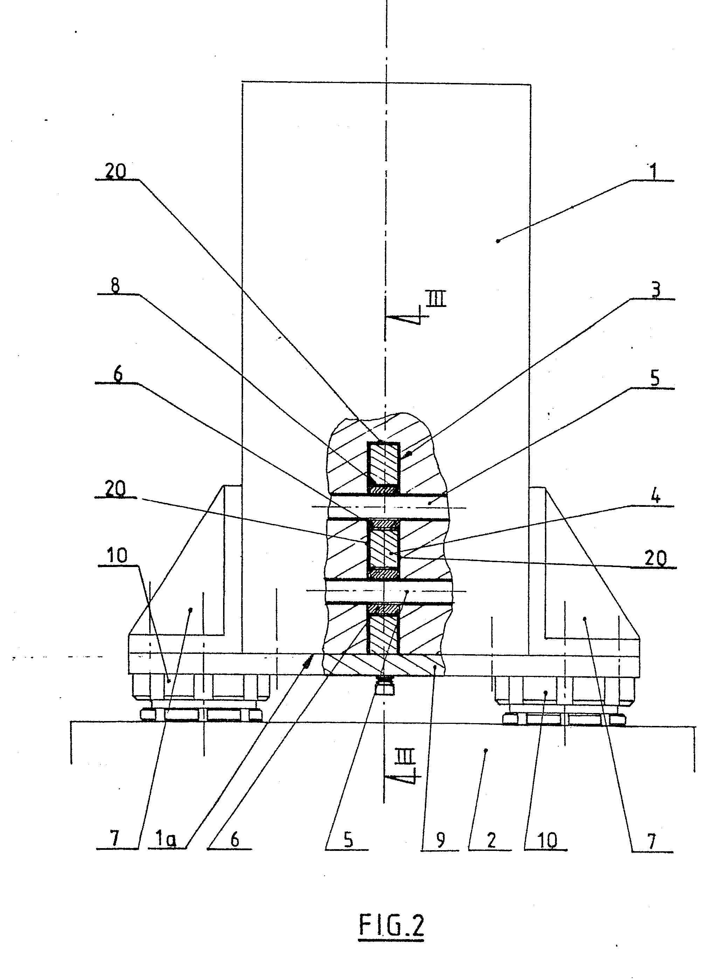

- Figure 2 représente une vue en coupe verticale partielle suivant la ligne II - II de la poutre de la figure 1 et,

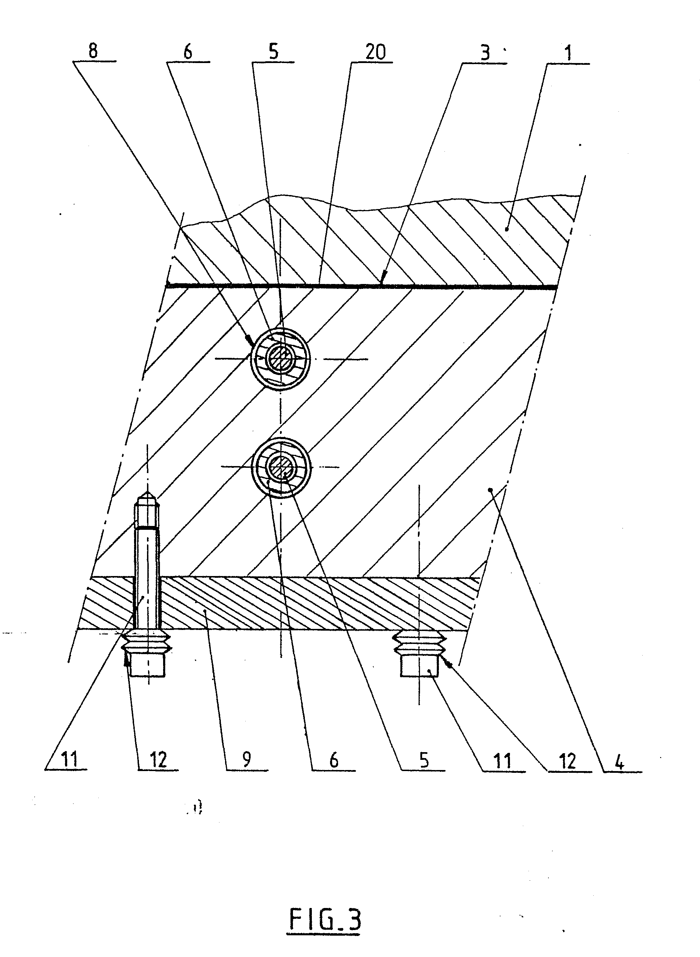

- Figure 3 représente une vue en coupe verticale suivant la ligne III - III du dispositif de la figure 2.

On a représenté sur les dessins en 1 une poutre en granit de forme générale parallélépipèdique en appui par ses deux extrémités sur un support schématisé en 2.

La poutre 1 comporte sur sa face horizontale inférieure la une rainure 3 de section rectangulaire courant sur toute la longueur de la poutre et située dans le plan médian vertical longitudinal de la poutre.

Dans la rainure 3 est engagée une lame d'acier 4 dont les dimensions correspondent sensiblement à celles de la rainure, un certain jeu étant néanmoins prévu entre la lame 4 et le fond et les flancs de la rainure 3.

Au droit des massifs d'appui 2 d'extrémité, la lame 4 est ancrée sur la poutre 1 par l'intermédiaire de boulons transversaux 5 engagés dans la poutre et traversant des canons d'entretoisement 6 traversant eux-mêmes la lame 4.

Les boulons 5 prennent la poutre 1 en sandwich entre deux paires d'équerres 7.

La longueur des canons 6 est égale à la largeur de la rainure 3, cependant que son diamètre intérieur est légèrement supérieur à celui des boulons 5 et que son diamètre extérieur est légèrement inférieur à celui des trous 8  ménagés dans la lame 4 pour le passage desdits canons 6.

Les deux paires d'équerres 7 sont boulonnées  à deux plaques d'appui horizontales 9 elles-mêmes reliées au massif d'appui 2 par des pieds rotulants symbolisés en 10.

La lame 4 repose directement sur les plaques inférieures 9 auxquelles elle est reliée par des boulons 11 et rondelles Belleville 12.

Le flanc de la lame 4 tournée vers le fond de la rainure 3 comporte deux décrochements 14 au droit de chaque massif d'appui 2, délimitant entre la lame 4 et le fond de la rainure 3 un espace qui sera occupé par une baguette métallique 15.

Une série de trous taraudés 16 perpendiculaires à l'axe de la poutre 1 sont régulièrement ménagés dans toute la largeur de la lame 4.

Un trou 16 est ainsi réalisé dans l'épaisseur de la lame 4 exactement en son centre, entre les deux appuis d'extrémité 2, et à partir de ce trou central les autres trous 16 sont répartis à équidistance, tous les 30 centimètres par exemple.

Les trous 16 reçoivent des vérins à vis 17 dont l'extrémité prend appui contre la baguette 15.

Un carter métallique amovible 18 boulonné sur la lame 4 masque les têtes des vérins 17.

Enfin, des perçages 19 sont réalisés dans l'épaisseur de la lame 4 de place en place en vue de permettre l'injection entre le fond de la rainure 3, la baguette 15 et la lame 4, d'un ciment plastique 20 destiné à procurer une meilleure répartition des efforts et des charges, notamment pour que ces derniers ne s'exercent pas uniquement sur les extrémités des vérins qui pourraient ainsi être matées. Un tel ciment 20 est également injecté au droit des massifs d'appui 2 entre les faces opposées de la lame 4 et les flancs de la rainure 3.

La lame 4 est en acier spécial et peut se dilater, le montage à jeu entre la lame et les canons 6 permettant le mouvement relatif nécessaire. Les canons 6 évitent le pinçage de la lame 4 par les boulons 5.

Le dispositif selon l'invention permet de mettre la poutre 2 strictement à l'horizontale en réglant la pression des vérins 17 individuellement à partir du vérin 17 du milieu de poutre.

Ce réglage est évidemment effectué en fonction du poids propre de la poutre et du poids des équipages mobiles supportés par elle.

Le dispositif permet un rattrapage de flèche de l'ordre de quelques centièmes de millimètre et autorise la réalisation de poutre en granit de longueur relativement importante et qui, sans un tel dispositif compensateur, travailleraient en trop forte sollicitation et risqueraient donc de céder.

Quelle que soit la position du ou des équipages mobiles le long de la poutre 1, celle-ci conserve une flèche nulle qui supprime un facteur d'erreur non négligeable dans les mesures effectuées par la tête de mesure mobile supportée directement ou indirectement par la poutre 1.

Les points d'appui 2 sont fixes, par exemple constitués par les extrémités supérieures de colonnes du banc de mesure, ou bien mobiles et constitués par exemple par des bâtis ou chariots mobiles sur des poutres horizontales parallèles du banc.

La poutre 1 peut être utilisée seule ou jumelée avec une seconde poutre identique parallèle, les deux supportant par exemple un chariot mobile parallèlement aux poutres jumelles et portant un coulisseau mobile verticalement et portant la tête de mesure du banc.

Enfin, l'invention n'est pas limitée au mode de réalisation représenté et décrit ci-dessus mais couvre également toutes les variantes notamment en ce qui concerne la fixation de la lame 4 à la poutre et les nature et agencement des vérins de réglage 17 et en ce qui concerne les applications à d'autres matériaux que le granit et d'autres usages des poutres.

REVENDICATIONS
=:=:=:=:=:=:=:=:=:=:=:=:=:=:=

1. Dispositif de pré-contrainte de poutres notamment de poutres en granit destinées à supporter les équipages mobiles d'un banc de mesure tridimensionnelle, caractérisé en ce qu'il est constitué d'une lame d'acier (4) disposée dans une rainure verticale (3) ménagée dans la face inférieure (1a) de la poutre à pré-contraindre (1) et s'étendant sensiblement sur toute la longueur de la poutre entre les deux appuis (2) de celle-ci, ladite lame (4) étant ancrée à chaque extrémité sur la poutre et traversée dans toute sa largeur de trous taraudés (16) répartis régulièrement le long de la poutre et recevant des vérins mécaniques (17) prenant appui contre le fond de ladite rainure (3).

2. Dispositif suivant la revendication 1 caractérisé en ce que la lame (4) est ancrée aux extrémités de la poutre (1) à l'aide de boulons (5) traversant d'une part, la poutre (1) et d'autre part, la rainure (3) et la lame (4) par l'intermédiaire de canons d'entretoisement (6) engagés dans la rainure (3) et présentant un léger jeu radial vis à vis desdits boulons (5) et de ladite lame (4) afin de permettre à celle-ci une certaine dilatation relativement à la poutre (1).

3. Dispositif suivant la revendication 1 ou 2 caractérisé en ce qu'entre les extrémités des vérins mécaniques (17) et le fond de la rainure (3) est interposée une baguette métallique (15) de répartition des efforts et des charges entre les vérins et la poutre.

4. Dispositif suivant l'une des revendications 1 à 3 caractérisé en ce qu'un léger intervalle est ménagé entre la tranche interne de la lame (4) et le fond de la rainure (3) et/ou la face avant de l'éventuelle baguette de répartition (15) ainsi qu'entre les deux faces opposées de la lame (4) et les flancs de la rainure (3) au droit des massifs d'appui (2), ledit intervalle recevant par injection un ciment plastique (20) à des fins de meilleures répartition des charges et efforts.

0117965

FIG1

**0117965**

**FIG.2**

FIG.3

Office européen
des brevets

**RAPPORT DE RECHERCHE EUROPEENNE**

EP 83 45 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. $^3$) |
|---|---|---|---|
| A | GB-A- 122 096 (HICKSON) <br> * Page 1, lignes 14-21; page 3, lignes 5-41; figures 1-6 * | 1 | E 04 C 3/26 <br> G 01 B 5/00 |
| A | US-A-3 501 840 (SCHILER) <br> * Colonne 4, lignes 25-75; figure 2 * | 1 | |
| A | CH-A- 231 199 (STAHLROHR-BAU) <br> * En entier * | 1 | |
| A | FR-A-1 443 022 (BIRGUER) <br> * Page 2, colonne 1, dernier paragraphe; figures 1,2 * | 1 | |
| A | GB-A-2 097 535 (LK TOOL) <br> * Page 1, lignes 64-65; figures * | 1 | DOMAINES TECHNIQUES RECHERCHES (Int. Cl. $^3$) <br><br> E 04 C <br> G 01 B <br> G 12 B <br> F 16 M |

Le présent rapport de recherche a été établi pour toutes les revendications

| Lieu de la recherche <br> LA HAYE | Date d'achèvement de la recherche <br> 17-11-1983 | Examinateur <br> HENDRICKX X. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82